# EUROPEAN PATENT SPECIFICATION

(11) **EP 2 159 862 B1**
(45) Date of publication and mention of the grant of the patent: **29.05.2013**
(21) Application number: 09252009.7
(22) Date of filing: 18.08.2009
(51) Int. Cl.: H01M 2/10, H01M 2/20, H01M 2/24, H01M 2/30, H01M 10/48, H01M 10/05, H01M 10/0525

(54) **Battery equipment of railway vehicle and railway vehicle**
Batterieanlage eines Schienenfahrzeugs und Schienenfahrzeug
Équipement de batterie de véhicule ferroviaire et véhicule ferroviaire

(30) Priority: 29.08.2008 JP 2008220681
(43) Date of publication of application: 03.03.2010
(73) Proprietor: Hitachi, Ltd., Tokyo 100-8280 (JP); Hitachi Mito Engineering Co., Ltd., Hitachinaka-shi Ibaraki 312-0033 (JP)
(72) Inventor: Ishida, Seiji, Tokyo 100-8220 (JP); Arita, Hiroshi, Tokyo 100-8220 (JP); Nishino, Takayoshi, Tokyo 100-8220 (JP); Suzuki, Osamu, Tokyo 100-8220 (JP); Yasuda, Yosuke, Tokyo 100-8220 (JP); Okabe, Satoru, Tokyo 100-8220 (JP); Sato, Yutaka, Tokyo 100-8220 (JP); Shimada, Motomi, Tokyo 100-8220 (JP); Toyota, Eiichi, Ibaraki 312-0033 (JP); Yamauchi, Shuko, Tokyo 100-8280 (JP)
(74) Representative: Paget, Hugh Charles Edward

(56) References cited:
- EP-A1- 2 012 387
- EP-A2- 1 786 057
- EP-A2- 1 901 389
- WO-A1-2008/137269
- JP-A- 6 163 770
- US-A1- 2004 157 117
- US-A1- 2005 269 995
- US-A1- 2007 144 804

## Description

### BACKGROUND OF THE INVENTION

### Field of the Invention

The present invention relates to battery equipment mounted on a railway vehicle and a railway vehicle comprising the battery equipment.

### Description of the Related Art

Railway vehicles are generally provided with a battery as an emergency power supply so as to be able to be safety, even when a power supply from aerial wire is interrupted or power supply is interrupted due to a failure of a generator or the like, certain functions such as illumination in cabins of the vehicles for a certain duration. Such a battery is normally housed in battery equipment mounted on the vehicle body.

Japanese Patent Laid-Open Publication No. 2004-231024 discloses battery equipment for a railway vehicle intended to reduce the size of the battery equipment and secure stability of a movable tray, in which the movable tray mounted with a battery is stored in a manner drawable through an opening on the front side thereof, the movable tray is guided in a direction in which connecting plugs are connected to connecting sockets when the movable tray is stored so as to allow smooth electrical connection.

When a lithium-ion battery is used as the battery, since the United Nations Recommendations on the Transport of Dangerous Goods imposes limitations to the weights of goods that can be transported in packaged conditions, the weights during transportation need to fall within the limitations and the goods need to be easily assembled after transportation.

EP 1 901 389 discloses a battery equipment with a case that allows a battery module storage section and a control section to be juxtaposed.

Furthermore, when a lithium-ion battery is applied to a drive system of a railway vehicle, many lithium-ion batteries need to be connected in series to produce a high voltage and the safety during assembly needs to be safety. Furthermore, the batteries need to be further downsized so as to be mounted in a limited space of the railway vehicle.

It is an object of the present invention to secure the safety during assembly and provide small battery equipment even in a high-voltage system with many batteries connected thereto.

### SUMMARY OF THE INVENTION

In order to solve the above described problems, the battery equipment of a railway vehicle of the present invention is as set out in claim 1.

Furthermore, the control section may have a configuration including connection terminals for connecting the battery modules with an outside apparatus, grounding terminals for grounding the battery modules and switching means to be connected to the connection terminals or the grounding terminals for setting a connection condition or grounding condition.

According to the present invention, it is possible to secure safety during assembly and provide small battery equipment even in a high-voltage system with many batteries connected thereto.

### BRIEF DESCRIPTION OF THE DRAWINGS

FIG. 1 is a perspective view of battery equipment for a railway vehicle according to the present invention;
FIG. 2 is a top view of the battery equipment for a railway vehicle according to the present invention;
FIG. 3 is a B-B' cross-sectional view of the battery equipment for a railway vehicle in FIG. 2;
FIG. 4 is an A-A' cross-sectional view of the battery equipment for a railway vehicle in FIG. 2;
FIG. 5 is a diagram showing an embodiment of the battery module according to the present invention;
FIG. 6 is a diagram showing an embodiment of the battery module according to the present invention;
FIG. 7 is a diagram showing a condition of a connector when the battery module according to the present invention is disconnected;
FIG. 8 is a diagram showing a condition of a connector when the battery module according to the present invention is connected;
FIG. 9 is a circuit diagram of an embodiment of the battery equipment for a railway vehicle according to the present invention;
FIG. 10 is a circuit diagram of another embodiment of the battery equipment for a railway vehicle according to the present invention;
FIG. 11 is a circuit diagram of a further embodiment of the battery equipment for a railway vehicle according to the present invention;
FIG. 12 is a front view of the maintenance switch according to the present invention;
FIG. 13 is a side view of a grounding condition of the maintenance switch according to the present invention;
FIG. 14 is a side view of a switching condition of the maintenance switch according to the present invention; and
FIG. 15 is a side view of a connection condition of the maintenance switch according to the present invention.

### DETAILED DESCRIPTION OF THE PREFERRED EMBODIMENTS

Hereinafter, embodiments will be explained using the accompanying drawings.

### [Embodiment 1]

### <Explanation of battery equipment>

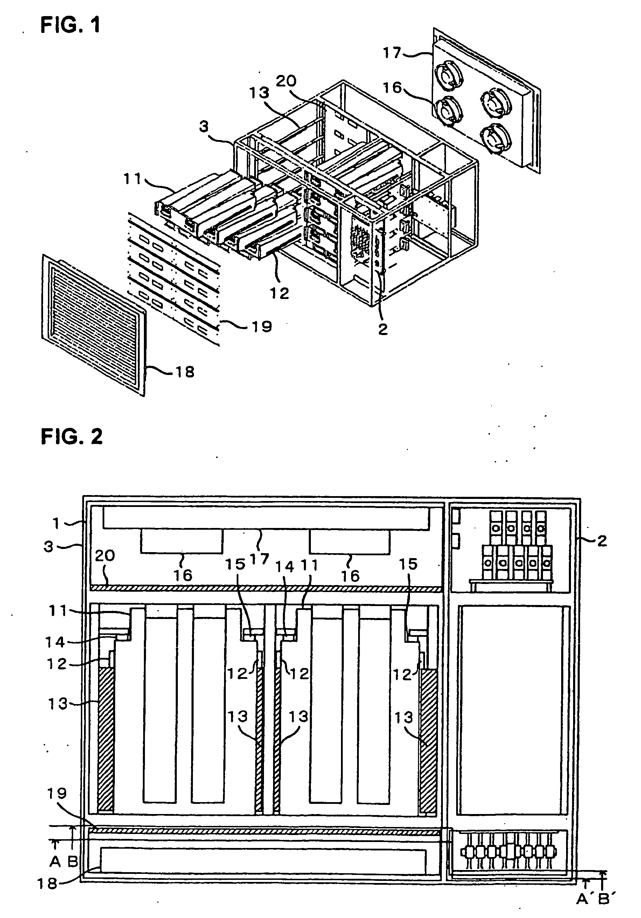

The configuration of the battery equipment of the present invention will be explained using FIG. 1 to FIG. 4.

FIG. 1, FIG. 2, FIG. 3 and FIG. 4 show a perspective view, a top view with a top surface panel removed, a B-B' cross-sectional view in FIG. 2 and an A-A' cross-sectional view in FIG. 2 of the battery equipment respectively. In FIG. 2, the under side shows the front, the upper side shows the back, the left side shows the left side and the right side shows the right side. The battery equipment is mounted on a vehicle so that the sides thereof are oriented in the anteroposterior direction and the front side is oriented outward in the traverse direction of the vehicle.

As described in FIG. 2, the battery equipment of the present invention is made up of a battery module storage section 1 that stores a plurality of battery modules, a control section 2 that detects conditions of the plurality of battery modules and controls charge and discharge thereof, and a case 3 that allows the battery module storage section 1 and the control section 2 to be juxtaposed. Apparatuses mounted on a railway vehicle are often mounted under the floor or on the roof to secure space for carrying passengers or the like. This limits the heights of the apparatuses mounted on the vehicle. For example, in the case of a common vehicle, the height is on the order of 650 mm. Furthermore, the anteroposterior direction, that is, the traverse direction of the vehicle is also restricted due to the vehicle limitations provided to prevent contact with the equipment installed on the ground. In contrast to this, as in the case of the battery equipment of the present invention, these limitations can be complied with by arranging the battery module storage section 1 and control section 2 in the traverse direction, that is, juxtaposed in the traveling direction of the vehicle.

The battery module storage section 1 is made up of a plurality of (eight in the present embodiment) battery modules 11, holding sections 12 attached to the battery modules, rails 13 that movably hold the holding sections 12 in the anteroposterior direction, connectors attached to connect signal lines of the battery modules with the battery equipment, that is, connectors that can be electrically connected with the battery modules (signal male connectors 14, main circuit male connectors 15), four fans 16 that exhaust cooling air from inside of the case to the outside of the case, that is, exhaust hot air to one end sides of the plurality of stored battery modules, a louver 17 that prevents foreign matters from entering from the back, a filter unit 18 that combines a louver for preventing invasion of foreign matters from the front and a filter that removes dust or the like from the cooling air taken in from the outside, a front seal plate 19 and a rear seal plate 20.

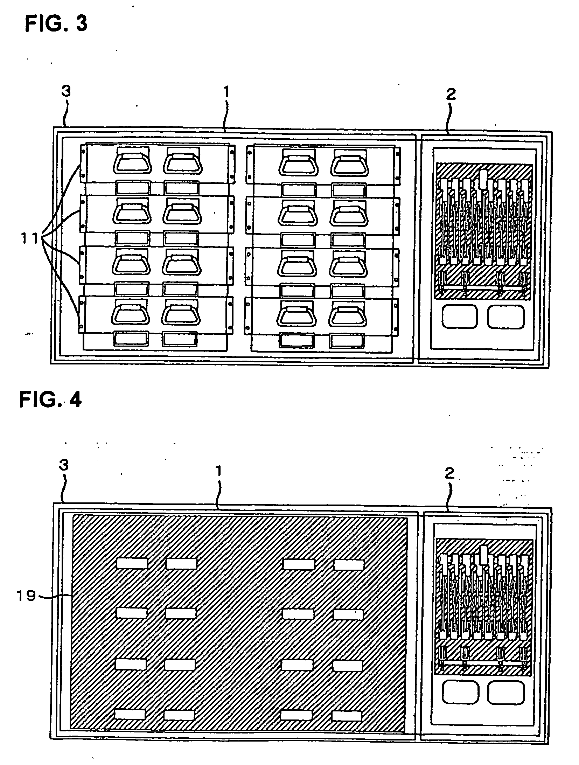

As shown in FIG. 1, the battery module 11 is inserted from the front while sliding the holding sections 12 mounted in the battery equipment on the rails 13, and the front seal plate 19 and filter unit 18 are attached in that order. Holes for allowing cooling air necessary to cool the battery module 11 are formed in the front seal plate 19 as shown in FIG. 4. Holes for allowing cooling air necessary to cool the battery module 11 are also formed in the rear seal plate 20 likewise.

The battery module storage section is provided with battery module moving means, rails 13 in the present embodiment, whereby the plurality of battery modules 11 are attachable to or detachable from the case 3 in the horizontal direction. Therefore, each battery module is attachable to or detachable from the vehicle side which is the direction perpendicular to the vehicle traveling direction, providing an effect of excellent maintainability.

### <Explanation of battery module>

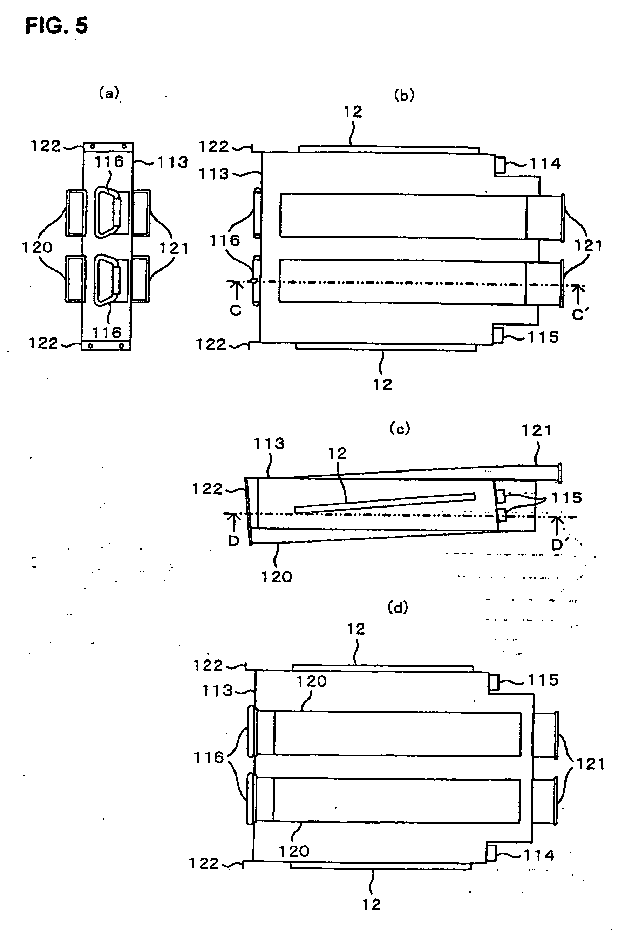

Next, the details of the battery module 11 will be explained using FIG. 5 to FIG. 8.

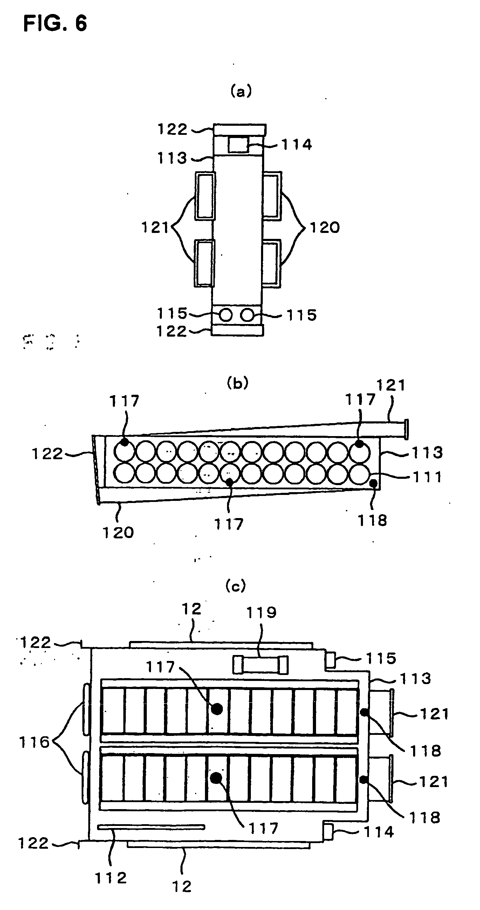

FIG. 5(a) is a front view, FIG. 5(b) is a top view, FIG. 5(c) is a side view and FIG. 5(d) is a bottom view. Furthermore, FIG. 6(a) is a rear view of FIG. 5(a), FIG. 6(b) is a C-C' cross-sectional view of FIG. 5(b) and FIG. 6(c) is a D-D' cross-sectional view of FIG. 5(c).

The battery module 11 is made up of 48 cells 111 (lithium-ion cells are used in the present embodiment), a cell controller 112, a battery module case 113 that stores the plurality of lithium-ion cells, a signal female connector 114, a main circuit female connector 115 for passing a battery charge/discharge current, handles 116 used to carry the battery modules 11, temperature sensors 117 that measure temperatures of the cells 111 (6 sensors in FIG. 6(b)), gas sensors 118 that detect leakage of electrolyte from the cells 111 (two sensors are used for the bottom surface on which the cells of the battery module case 113 are provided in FIG. 6(b)), a fuse 119, ducts provided on the top surface and bottom surface of the battery module case 113 (two air intake ducts 120 provided on the under surface of the battery module case 113, two exhaust ducts 121 provided on the top surface of the battery module case 113), mounting sections 122 and the aforementioned holding sections 12.

As shown in FIG. 6(b), a plurality of lithium-ion cells are stored in one battery module 11. Although FIG. 5(c) and FIG. 6(b) describe that the cells 111 are placed horizontally, when mounted on the battery equipment, the cells 111 are inserted so that the undersides of the air intake ducts 120, the top surfaces of the exhaust ducts 121 and the holding sections 12 are placed horizontally. This can prevent unnecessary spaces from being created in the upper and lower parts of the battery equipment. Furthermore, influences of gravity on the battery module 11 can be avoided at the time of insertion and accidents at the time of attachment or detachment can thereby be prevented.

The cells 111 are connected to the control section 2 via the main circuit female connectors 115 and the main circuit male connectors 15 to carry out charge and discharge.

The cell controller 112 receives signals of respective voltages of the 48 cells 111 incorporated in the battery module case 113, temperature sensors 117 that measure the temperatures of the cells 111 and the gas sensors 118 that detect leakage of electrolyte from the cells 111 as input, converts the signals into serial transmission signals and is connected to the control section 2 via the signal female connectors 114 and signal male connectors 14. The cell controller 112 converts signals of the voltages of the respective cells 111, temperature sensors 117 and gas sensors 118 to serial communication signals and transmits the signals to a battery controller which will be described later via the signal female connectors 114. Furthermore, the cell controller 112 adjusts the amount of charge per cell based on a command from the battery controller.

The temperature sensors 117 are attached to a cell having the highest temperature and a cell having the lowest temperature under at least cooling conditions. The temperature sensor of the cell with the highest temperature performs control by the fan 16 on the operating temperature on the high temperature side which influences the life of the cells and restrictions on the charge/discharge current. On the other hand, the temperature sensor of the cell with the lowest temperature can restrict the operating temperature on the low temperature side where the performance of the cell deteriorates through the control by the fan 16.

The battery module 11 is inserted into the back as if a drawer by placing and sliding the holding sections 12 on the rails 13 attached to the case 3. By inserting the battery module 11, the signal female connector 114 and the main circuit female connector 115 fixed to the battery module 11 are coupled with the signal male connector 14 and the main circuit male connector 15 fixed to the case 3 respectively.

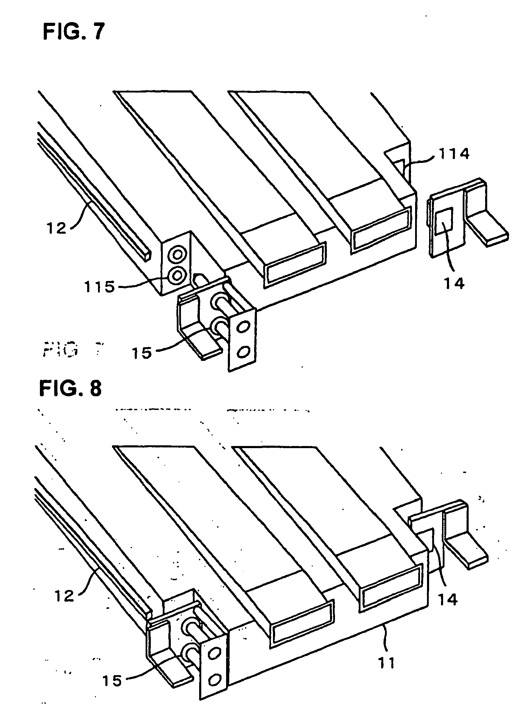

FIG. 7 and FIG. 8 show this situation. FIG. 7 shows a condition immediately before the coupling and FIG. 8 shows a condition immediately after the coupling. This allows the battery module 11 and the control section 2 to be connected together without directly contacting the connectors. Especially, since a voltage is always applied to the main circuit connector of the battery module 11, this can prevent electric shock or accident caused by connection errors. The signal female connector 114 and the main circuit female connector 115 may be placed at the rear end of the battery module 11, but their placement on the side can reduce dimensions in the anteroposterior direction where there are strict limitations when mounted on the railway vehicle.

Furthermore, suppose the weight of the battery module is 35 kg or less. This allows the battery module to fall within the range of weight defined by the United Nations Recommendations on the Transport of Dangerous Goods in packaged condition (35 kg or less), making it possible to transport the battery module by plane in a condition with the battery module 11 dismounted and easily assemble the battery module at the destination.

Furthermore, since the battery module 11 can be attached to or detached from the front of the battery equipment, that is, from the side of the vehicle, the module can be attached or detached even when the battery equipment is mounted on the vehicle. Furthermore, designating the connector on the battery module side as the female connector can lower the possibility that short circuit related accidents may occur. Even when the main circuit female connector 115 is short-circuited, the inclusion of the fuse in the module allows any short circuit current to be blocked and can secure the safety.

Next, the cooling of the cell 111 will be explained. The air intake duct 120 is pressed against the front seal plate 19 and the outside of the air intake duct 120 is isolated from the space where the filter unit 18 is located by the front seal plate 19 and the air intake duct. The inside of the air intake duct 120 communicates with the space where the filter unit 18 is located via the holes of the front seal plate 19. The exhaust duct 121 is pressed against the rear seal plate 20 and the outside of the exhaust duct 121 is isolated from the space where the fan 16 is located by the rear seal plate 20 and the exhaust duct 121. The inside of the exhaust duct 121 communicates with the space where the fan 16 is located via the holes of the rear seal plate 20.

The cooling air to suppress a temperature rise caused by heat generated by charge and discharge of the cell 111 is taken into the battery equipment via the filter unit 18. The cooling air taken in passes from the holes provided in the front seal plate 19 through the air intake duct 120 of the battery module and cools the side of the cells 111. The cooling air whose temperature has risen by cooling passes through the exhaust duct 121, exits from the holes provided in the rear seal plate 20, passes through the fan 16 and the louver 17, and discharged out of the battery equipment.

As described above, the cooling air is guided to only the side of the cells 111 and never enters the periphery of the signal male connector 14, signal female connector 114, main circuit male connector 15 and main circuit female connector 115. Likewise, the cooling air never enters the control section 2 either. This prevents dust or the like that cannot be removed by the filter unit 18 from stacking on the connectors or the apparatus of the control section 2 and can suppress the occurrence of malfunctions due to contact failures, corrosions or short circuits.

Furthermore, adopting a structure of sealing the portion indicated by the thick line inside the module in FIG. 6(c) can avoid stacking of dust or the like in the electrode portion provided on the left and right (both ends) of the cell 111 or the cell controller 112 and prevent malfunctions due to corrosions or short circuits.

Furthermore, since a gas produced by leakage of electrolyte is heavier than air, placing the gas sensor 118 in the lowest place in the space in which the cells 111 are stored allows leakage of electrolyte to be efficiently detected. As described above, since the cells 111 are inserted such that the holding sections 12 are placed horizontally, the cells 111 in the rear are lowered.

### <Explanation of control section>

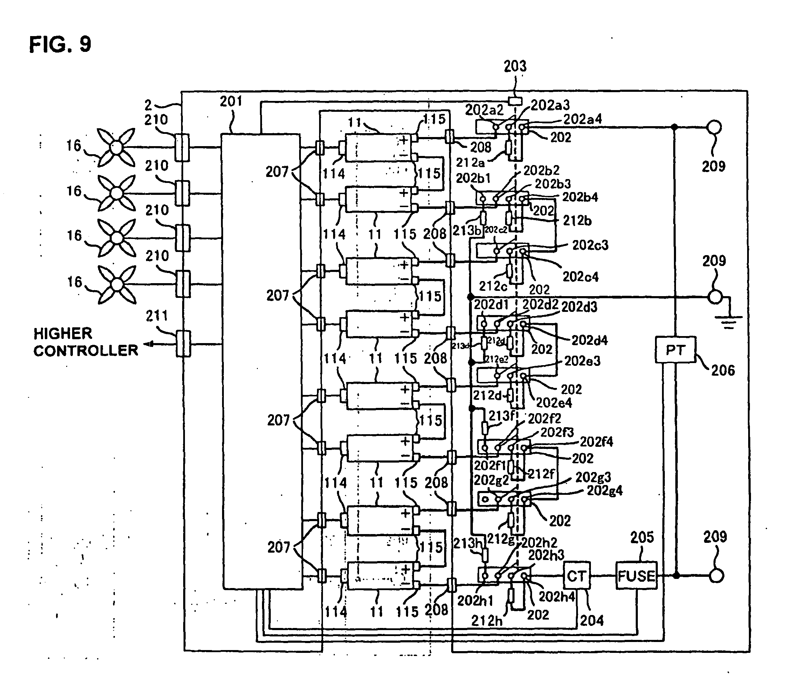

Next, the control section 2 will be explained using FIG. 9 to FIG. 11. FIG. 9 is a circuit diagram in which all of a plurality of (eight in the present embodiment) battery modules 11 are connected in series (8-serial).

The control section 2 is made up of a battery controller 201, maintenance switches 202, a proximity switch 203, a current detector 204, a fuse 205, a voltage detector 206, module signal connectors 207, module main circuit connectors 208, outside main circuit terminals 209, fan connectors 210, a higher communication connector 211, rush current prevention resistors 212a to 212g and grounding resistors 213b to 213h.

The battery controller 201 is connected to the proximity switch 203 that detects the conditions of the maintenance switches, the current detector 204 that detects charge/discharge currents of the battery modules, a wire breakage detector of the fuse 205 that protects the battery modules from an overcurrent and the voltage detector 206 that detects an output voltage. The battery controller 201 is further connected to the module signal connectors 207, the cell controller 112 via the signal male connector 14 and signal female connector 114, the fans 16 via the fan connectors 210 and a higher controller via the higher communication connector 211.

Thus, since the battery controller 201 is connected to the battery module storage section 1 or the outside via the connectors, these connections can be easily removed. Furthermore, such a structure that the control section 2 can be drawn from the front is adopted. This allows the control section 2 to be easily removed from the case 3, providing excellent maintainability. The battery controller 201 calculates the amount of charge of the cells 111 and performs detection of an abnormal condition which is necessary for protection based on the output of the current detector 204, output of the voltage detector 206 and the temperature detected by the cell controller 112 transmitted through communication and transmits information on the amount of charge and abnormal condition to the higher controller through serial communication. The battery controller 201 detects the wire breakage condition of the fuse 205 and abnormality of the fan 16, and likewise transmits the detection results to the higher controller. Furthermore, the battery controller 201 commands the cell controller 112 to control a balance of each cell based on voltages of the respective cells detected by the cell controller 112. Furthermore, the battery controller 201 controls the start of operation of the fans 16 based on the temperature of the cell having the highest temperature and controls the stoppage of operation of the fans 16 based on the temperature of the cell having the lowest temperature.

Next, connections of the main circuit will be explained. The battery modules 11 are serially connected in sets of two, connected to the maintenance switches 202 via the module main circuit connectors 208 and further connected to the outside via the outside main circuit terminals 209.

The maintenance switches 202 have grounding terminals 202b1, 202d1, 202f1, 202h1, module connection levers 202a2, 202b2, 202c2, 202d2, 202e2, 202f2, 202g2, 202h2, module auxiliary connection terminals 202a3, 202b3, 202c3, 202d3, 202e3, 202f3, 202g3, 202h3 and module connection terminals 202a4, 202b4, 202c4, 202d4, 202e4, 202f4, 202g4 and 202h4.

The battery module 11 is connected to the module connection lever via the module main circuit connector 208 and basically performs switching between the grounding terminal and module connection terminal. In a normal condition in which the module connection lever is connected to the module connection terminal, all the battery modules 11 are connected in series to the outside apparatus. The battery equipment is normally used in this condition. However, since some battery modules 11 have high potentials, there is a danger of electric shock or the like if the battery modules 11 are mounted or dismounted in this condition. Next, in the case of a grounding condition in which the module connection lever is connected to the grounding terminal, the main circuit female connector of the cathode is grounded via the grounding resistors 213b to 213h for every two serially connected battery modules 11. Since potentials of all the battery modules 11 are suppressed to a low level in this condition, it is possible to reduce the danger of electric shock or the like when the battery modules 11 are mounted or dismounted.

That is, the present embodiment adopts a configuration with the control section 2 provided with a module connection terminal for connecting each battery module to an outside apparatus, a grounding terminal for grounding the battery module, switching means, or the module connection lever here, to be connected to the connection terminal or grounding terminal to set a connection condition or grounding condition.

Furthermore, when the grounding condition is switched over to the connection condition, the battery module is connected to the module connection lever and the module auxiliary connection terminal first, a serial connection and outside connection are made via a rush current prevention resistor to suppress a charge current to stray capacitance or the like. Subsequently, the module connection lever and the connection terminal are connected. That is, when a grounding condition is switched over to a connection condition, the module connection lever is connected to the module auxiliary connection terminal before being connected to the connection terminal and a rush current at the time of connection can thereby be suppressed. This is because a resistor such as a grounding resistor is provided between the module connection terminal and grounding terminal as described above.

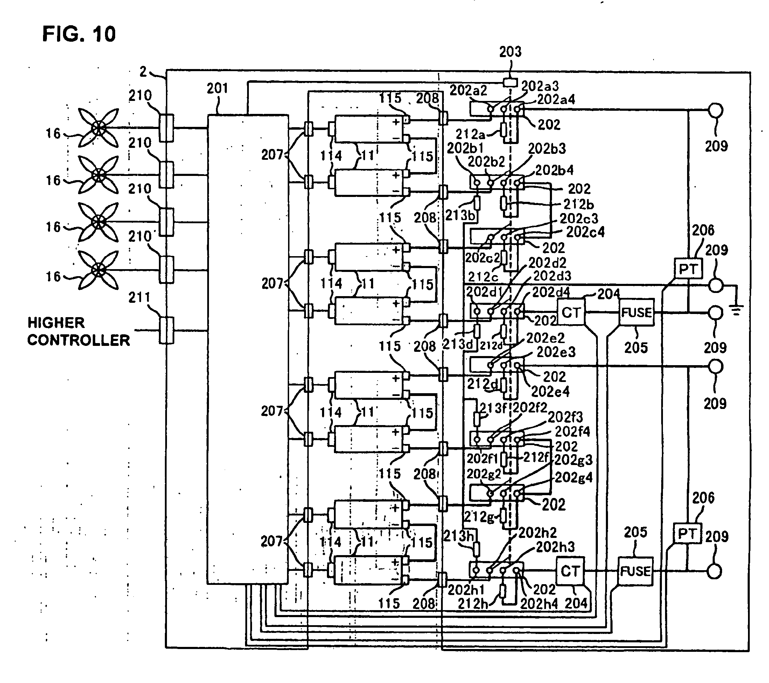

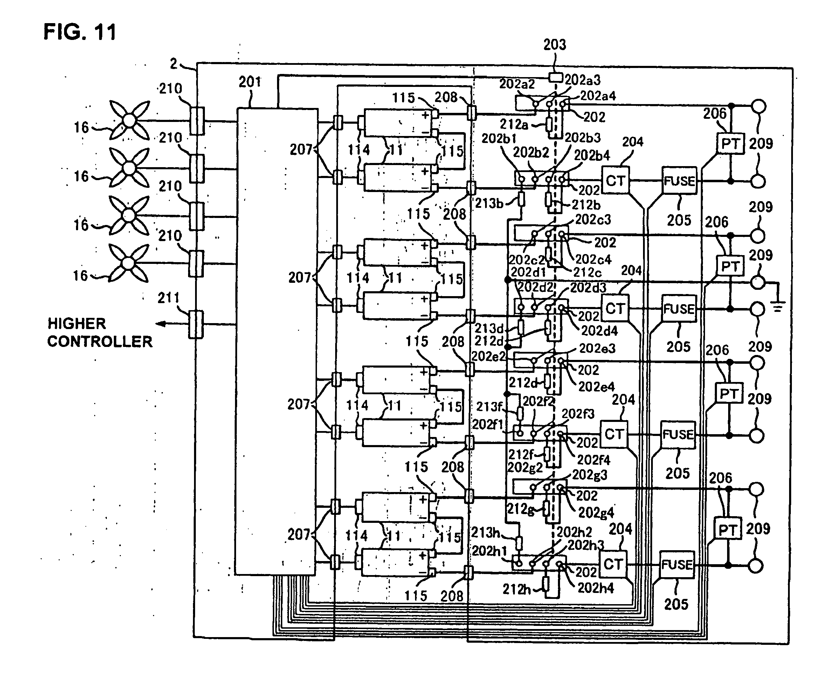

Furthermore, FIG. 10 shows a circuit diagram in the case where two battery sets of four serially connected battery modules 11 are connected in parallel (4-serial, 2-parallel) and FIG. 11 shows a circuit diagram in the case where four battery sets of two serially connected battery modules 11 are connected in parallel (2-serial, 4-parallel). As the number of sets increases, the system can be adapted to such a change by only increasing the number of current detectors 204, fuses 205 and voltage detectors 206 and changing the connection of the maintenance switches 202.

That is, every battery set requires the current detector 204, fuse 205 and voltage detector 206 at least one each and the numbers of the current detectors 204, fuses 205 and voltage detectors 206 increase every time the number of sets increases as shown in FIG. 10 and FIG. 11, but the number of sets can be increased by only changing the connections of the maintenance switches 202.

### <Maintenance switch>

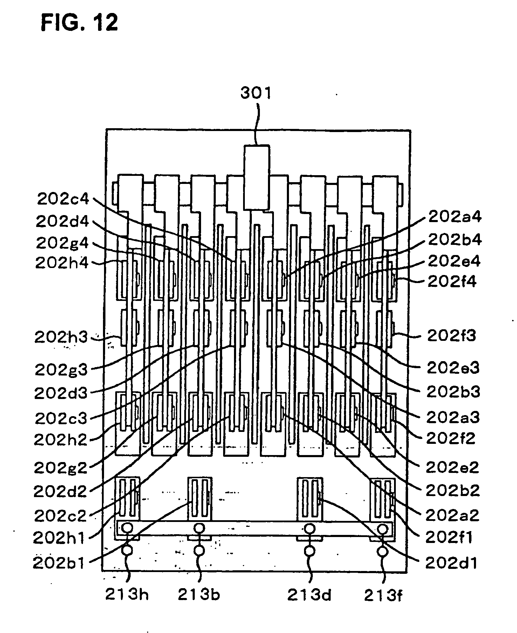

The structure of the maintenance switch 202 will be explained using FIG. 12 to FIG. 15.

FIG. 12 shows a front view of the connection condition of the maintenance switch 202. Reference numeral 301 denotes an operation lever for collectively operating the module connection levers (202a2, 202b2, 202c2, 202d2, 202e2, 202f2, 202g2 and 202h2). The module connection terminal (202f4), module connection auxiliary terminal (202f3), module connection lever (202f2) and grounding terminal (202f1) are arranged in order from the top. Furthermore, as for the module connection terminal and grounding terminal arrays in the lateral direction (direction in which the battery module storage section and the control section are juxtaposed and traveling direction of the vehicle), terminals with lower potentials are arranged as outside terminals, and terminals with higher potentials than those of the outside terminals are arranged as their positions come closer to the center. To be more specific, cathodes and anodes of battery sets with the odd-numbered lowest potentials are arranged from the leftmost terminal such as the cathode of the battery set with the lowest potential, anode of the battery set with the lowest potential, the cathode of the battery set with the third lowest potential, anode of the battery set with the third lowest potential and so on, while cathodes and anodes of battery sets with the even-numbered lowest potentials are arranged from the rightmost terminal such as the cathode of the battery set with the second lowest potential, anode of the battery set with the second lowest potential, the cathode of the battery set with the fourth lowest potential, anode of the battery set with the fourth lowest potential and so on. The battery set in the present embodiment represents two serially connected battery modules.

This makes it possible to suppress a voltage between electrodes in the maintenance switch 202, shorten the creepage distance and suppress potentials of electrodes at both ends of the maintenance switches 202 to a low level and thereby shorten the distance from the case and reduce the size of the apparatus.

Moreover, the left and right sides may be switched round and there will be no problems even if even-numbered terminals are arranged from the left and odd-numbered terminals are arranged from the right. Furthermore, electrodes with the same potential may be switched round such as the anode of the battery set with the lowest potential and cathode of the battery set with the second lowest potential.

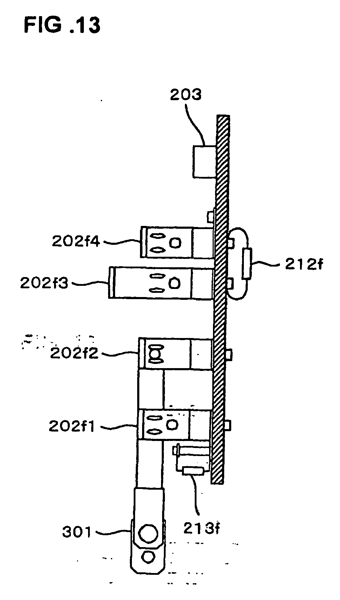

FIG. 13 is a side view of the maintenance switch 202 in the grounding condition. A grounding resistor 213f is connected between a grounding bar held on the front from the grounding terminal 202f1 via an insulating member and the grounding terminal.

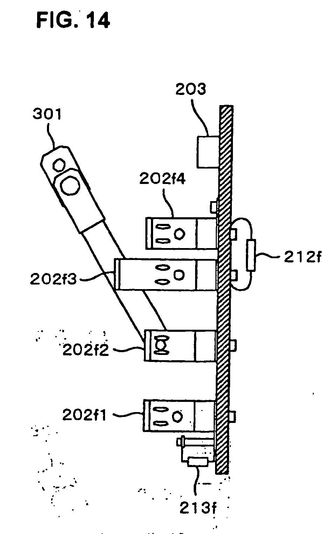

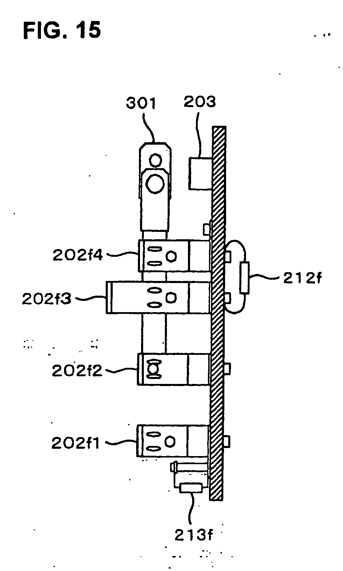

Next, FIG. 14 shows a side view of the maintenance switch 202 in the middle of switching a grounding condition over to a connection condition. The module connection lever 202f2 comes into contact with a module connection auxiliary terminal 202f3 first and the two are connected via a rush current prevention resistor 212f. The rush current prevention resistor 212f is connected between the module connection auxiliary terminal 202f3 and a module connection terminal 202f4. When the module connection lever 202f2 is further operated, the connection condition shown in FIG. 15 results. In this condition, both terminals of the rush current prevention resistor 212f are short-circuited and a direct connection is realized without the medium of the rush current prevention resistor 212f. Furthermore, the proximity switch 203 is disposed on the side opposite (upper side) to the module connection auxiliary terminal (202f3) with respect to the module connection terminal (202f4). Therefore, in the connection condition as shown in FIG. 15, the proximity switch 203 can detect the operation lever 301 and detect that the maintenance switch 202 is in a connection condition, and can detect omission of switching of the maintenance switch 202 by the higher controller via the battery controller 201.

Furthermore, by mounting the above described battery equipment on the railway vehicle, it is possible to secure the safety during assembly and provide a hybrid railway mounted with small battery equipment even in a high-voltage system with many batteries connected thereto.

## Claims

1. Battery equipment for a railway vehicle comprising:
a plurality of battery modules (11), each of which stores a plurality of lithium-ion cells;
a battery module storage section (1) that stores the plurality of battery modules (11),
a control section (2) that detects conditions of the plurality of battery modules and controls charge and discharge thereof; and
a case (3) that allows the battery module storage section (1) and the control section (2) to be juxtaposed in the travelling direction of the vehicle charcaterised in that the storage section (1) and the battery modules (11) being arranged so that the battery modules are attachable to or detachable from the battery equipment in one direction which is perpendicular to the treavelling direction of the vehicle.

2. The battery equipment for a railway vehicle according to claim 1, wherein weights of the plurality of battery modules (11) are 35 kg or less.

3. The battery equipment for a railway vehicle according to claim 1 or 2, wherein the battery module storage section (1) comprises battery module moving means (13) for making each of the plurality of battery modules attachable to or detachable from the case in a horizontal direction.

4. The battery equipment for a railway vehicle according to claim 1, 2 or 3, wherein the battery module storage section comprises connectors that are electrically connectable with the battery modules the connectors being brought into a coupling condition by the action of inserting the battery modules.

5. The battery equipment for a railway vehicle according to any one of claims 1 to 4, wherein the battery module storage section comprises a fan (16) that exhausts hot air from an end side of the plurality of stored battery modules opposite the end side where the battery modules are attached or detached in said one direction.

6. The battery equipment for a railway vehicle according to claim 1, wherein the battery module comprises a battery module case (113) that stores a plurality of lithium-ion cells and ducts (120, 121) provided on an upper side and an under side of the battery module case, said ducts being air intake ducts (120) provided on the under surface of the battery module case (113) and exhaust ducts (121) on the top surface of the battery module case (113).

7. The battery equipment for a railway vehicle according to claim 6, wherein the battery module case comprises a temperature sensor (117) that measures temperatures of lithium-ion cells.

8. The battery equipment for a railway vehicle according to claim 6 or 7, wherein the battery module case comprises a gas sensor (118) that detects leakage of electrolyte from the lithium-ion cells.

9. The battery equipment for a railway vehicle according to claim 1, wherein the control section comprises:
connection terminals for connecting the plurality of battery modules in series;
grounding terminals for grounding the battery modules; and
switching means arranged to be connected to the connection terminals or the grounding terminals for setting a connection condition or a grounding condition.

10. The battery equipment for a railway vehicle according to claim 9, wherein the control section comprises:
an auxiliary connection terminal connected before the switching means is connected to the connection terminals when the switching means is switched from the grounding condition to the connection condition; and
a resistor between the connection terminal and the auxiliary connection terminal.

11. The battery equipment for a railway vehicle according to claim 9, wherein the switching means is a module connection lever.

12. The battery equipment for a railway vehicle according to claim 9, wherein the connection terminals and the grounding terminals are arranged such that terminals with lower potentials are provided outside and terminals with higher potentials than the outside terminals are provided closer to the center in a direction in which the battery module storage section and the control section are juxtaposed.

13. The battery equipment for a railway vehicle according to claim 9, wherein when a plurality of serially connected battery modules are used as a battery set, the connection terminals and the grounding terminals are arranged such that cathodes and anodes of the battery sets with odd-numbered lowest potentials are arranged in order from one end and cathodes and anodes of the battery sets with even-numbered lowest potentials are arranged in order from the other end in the direction in which the battery module storage section and the control section are juxtaposed.

14. A railway vehicle comprising the battery equipment for a railway vehicle according to any one of claims 1 to 13.

## Patentansprüche

1. Batterieanlage für ein Schienenfahrzeug, aufweisend:
mehrere Batteriemodule (11), die jeweils mehrere Lithiumionenzellen aufnehmen,
einen Batteriemodul-Aufnahmeabschnitt (1), der mehrere Batteriemodule (11) aufnimmt,
einen Steuerabschnitt (2), der Zustände der Batteriemodule erfasst und deren Laden und Entladen steuert, und
ein Gehäuse (3), um den Batteriemodul-Aufnahmeabschnitt (1) und den Steuerabschnitt (2) in Fahrtrichtung des Fahrzeugs aneinander angrenzend anordnen zu können,
**dadurch gekennzeichnet, dass** der Aufnahmeabschnitt (1) und die Batteriemodule (11) so angeordnet sind, dass die Batteriemodule in einer zur Fahrtrichtung des Fahrzeugs senkrechten Richtung an der Batterieanlage anbringbar oder von ihr abnehmbar sind.

2. Batterieanlage für ein Schienenfahrzeug nach Anspruch 1, wobei die Batteriemodule (11) Gewichte von 35 kg oder weniger aufweisen.

3. Batterieanlage für ein Schienenfahrzeug nach Anspruch 1 oder 2, wobei der Batteriemodul-Aufnahmeabschnitt (1) eine Batteriemodul-Bewegungseinrichtung (13) aufweist, um die jeweiligen Batteriemodule in horizontaler Richtung am Gehäuse anbringbar oder von ihm abnehmbar zu machen.

4. Batterieanlage für ein Schienenfahrzeug nach Anspruch 1, 2 oder 3, wobei der Batteriemodul-Aufnahmeabschnitt Verbinder aufweist, die elektrisch mit den Batteriemodulen verbindbar sind und durch einen Einführvorgang der Batteriemodule in einen Verbindungszustand gebracht werden.

5. Batterieanlage für ein Schienenfahrzeug nach einem der Ansprüche 1 bis 4, wobei der Batteriemodul-Aufnahmeabschnitt einen Lüfter (16) aufweist, der heiße Luft von einer Seite der aufgenommenen Batteriemodule gegenüber derjenigen Seite, an der die Batteriemodule in der genannten einen Richtung angebracht oder abgenommen werden, ausstößt.

6. Batterieanlage für ein Schienenfahrzeug nach Anspruch 1, wobei ein Batteriemodul ein Batteriemodulgehäuse (113), das mehrere Lithiumionenzellen enthält, und auf der Oberseite und der Unterseite des Batteriemodulgehäuses Kanäle (120, 121) aufweist, die Lufteinlasskanäle (120) auf der Unterfläche des Batteriemodulgehäuses (113) und Abgabekanäle (121) auf der Oberfläche Batteriemodulgehäuses (113) darstellen.

7. Batterieanlage für ein Schienenfahrzeug nach Anspruch 6, wobei das Batteriemodulgehäuse einen Temperatursensor (117) aufweist, der Temperaturen von Lithiumionenzellen misst.

8. Batterieanlage für ein Schienenfahrzeug nach Anspruch 6 oder 7, wobei das Batteriemodulgehäuse einen Gassensor (118) aufweist, der ein Entweichen von Elektrolyt aus den Lithiumionenzellen erfasst.

9. Batterieanlage für ein Schienenfahrzeug nach Anspruch 1, wobei der Steuerabschnitt Folgendes aufweist:
Verbindungsanschlüsse zur Verbindung der Batteriemodule in Reihe,
Erdungsanschlüsse zum Erden der Batteriemodule, und
eine zur Verbindung mit den Verbindungsanschlüssen oder den Erdungsanschlüssen eingerichtete Schalteinrichtung, um einen Verbindungszustand oder Erdungszustand festzulegen.

10. Batterieanlage für ein Schienenfahrzeug nach Anspruch 9, wobei der Steuerabschnitt Folgendes umfasst:
einen Hilfsverbindungsanschluss, der bei Schalten der Schalteinrichtung vom Erdungszustand zum Verbindungszustand verbunden wird, bevor die Schalteinrichtung mit den Verbindungsanschlüssen verbunden wird, und
einen Widerstand zwischen einem Verbindungsanschluss und dem Hilfsverbindungsanschluss.

11. Batterieanlage für ein Schienenfahrzeug nach Anspruch 9, wobei die Schalteinrichtung einen Modulverbindungshebel darstellt.

12. Batterieanlage für ein Schienenfahrzeug nach Anspruch 9, wobei die Verbindungsanschlüsse und die Erdungsanschlüsse so angeordnet sind, dass Anschlüsse mit niedrigeren Potentialen außen und Anschlüsse mit höheren Potentialen als die äußeren Änschlüsse in Richtung, in der der Batteriemodu-Aufnahme-abschnitt und der Steuerabschnitt aneinander angrenzen, näher bei der Mitte vorgesehen sind.

13. Batterieanlage für ein Schienenfahrzeug nach Anspruch 9, wobei bei Verwendung mehrerer in Reihe geschalteter Batteriemodule als Batteriesatz die Verbindungsanschlüsse und die Erdungsanschlüsse so angeordnet sind, dass in der Richtung, in der der Batteriemodul-Aufnahmeabschnitt und der Steuerabschnitt aneinander angrenzen, die Kathoden und Anoden der Batteriesätze mit ungeradzahligen niedrigsten Potentialen in einer von einem Ende ausgehenden Reihenfolge und die Kathoden und Anoden der Batteriesätze mit geradzahligen niedrigsten Potentialen in einer vom anderen Ende ausgehenden Reihenfolge angeordnet sind.

14. Schienenfahrzeug mit einer Batterieanlage für ein Schienenfahrzeug nach einem der Ansprüche 1 bis 13.

## Revendications

1. Équipement de batterie pour un véhicule ferroviaire comportant :
une pluralité de modules de batterie (11), chacun d'entre eux stockant une pluralité de cellules lithium-ion,
une section de stockage de modules de batterie (1) laquelle stocke la pluralité de modules de batterie (11),
une section de commande (2) laquelle détecte des conditions de la pluralité de modules de batterie et commande la charge et la décharge de ceux-ci, et
un boîtier (3) qui permet à la section de stockage de modules de batterie (1) et à la section de commande (2) d'être juxtaposées dans la direction de déplacement du véhicule, **caractérisé en ce que** la section de stockage (1) et les modules de batterie (11) sont disposés de sorte que les modules de batterie peuvent être fixés à l'équipement de batterie dans une direction ou retirés de celui-ci, lequel est perpendiculaire à la direction de déplacement du véhicule.

2. Équipement de batterie pour un véhicule ferroviaire selon la revendication 1, dans lequel les poids de la pluralité de modules de batterie (11) sont de 35 kilos ou inférieurs.

3. Équipement de batterie pour un véhicule ferroviaire selon la revendication 1 ou 2, dans lequel la section de stockage de modules de batterie (1) comporte des moyens de déplacement de modules de batterie (13) pour permettre à chaque module de la pluralité de modules de batterie d'être fixé au boîtier dans une direction horizontale ou retiré de celui-ci.

4. Équipement de batterie pour un véhicule ferroviaire selon la revendication 1, 2 ou 3, dans lequel la section de stockage de modules de batterie comporte des connecteurs qui peuvent être électriquement reliés au modules de batterie, les connecteurs étant amenés dans une condition de couplage par l'action d'insertion des modules de batterie.

5. Équipement de batterie pour un véhicule ferroviaire selon l'une quelconque des revendications 1 à 4, dans lequel la section de stockage de modules de batterie comporte un ventilateur (16) qui évacue de l'air chaud d'un côté d'extrémité de la pluralité de modules de batterie stockés opposé au côté d'extrémité où les modules de batteries sont fixés ou retirés dans ladite une direction.

6. Équipement de batterie pour un véhicule ferroviaire selon la revendication 1, dans lequel le module de batterie comporte un boîtier de module de batterie (113) lequel stocke une pluralité de cellules lithium-ion et de gaines (120, 121) agencées sur un côté supérieur et un côté inférieur du boîtier de module de batterie, lesdites gaines étant des gaines d'admission d'air (120) agencées sur la surface inférieure du boîtier de module de batterie (113) et des gaines d'évacuation (121) sur la surface supérieure du boîtier de module de batterie (113).

7. Équipement de batterie pour un véhicule ferroviaire selon la revendication 6, dans lequel le boîtier de module de batterie comporte une sonde de température (117) laquelle mesure des températures de cellules lithium-ion.

8. Équipement de batterie pour un véhicule ferroviaire selon la revendication 6 ou 7, dans lequel le boîtier de module de batterie comporte un capteur de gaz (118) laquelle détecte une fuite d'électrolyte à partir des cellules lithium-ion.

9. Équipement de batterie pour un véhicule ferroviaire selon la revendication 1, dans lequel la section de commande comporte :
des bornes de connexion pour monter la pluralité de modules de batterie en série,
des bornes de mise à la terre pour mettre à la terre les modules de batterie, et
des moyens de commutation conçus pour être connectés aux bornes de connexion ou aux bornes de mise à la terre afin d'établir une condition de connexion ou une condition de mise à la terre.

10. Équipement de batterie pour un véhicule ferroviaire selon la revendication 9, dans lequel la section de commande comporte :
une borne de connexion auxiliaire reliée avant la connexion des moyens de commutation aux bornes de connexion lorsque les moyens de commutation sont commutés de la condition de mise à la terre à la condition de connexion, et
une résistance entre la borne de connexion et la borne de connexion auxiliaire.

11. Équipement de batterie pour un véhicule ferroviaire selon la revendication 9, dans lequel les moyens de commutation sont un levier de connexion de module.

12. Équipement de batterie pour un véhicule ferroviaire selon la revendication 9, dans lequel les bornes de connexion et les bornes de mise à la terre sont disposées de sorte que des bornes ayant des potentiels inférieurs sont agencées à l'extérieur et des bornes ayant des potentiels supérieurs à ceux des bornes extérieures sont agencées plus proches du centre dans une direction dans laquelle la section de stockage de modules de batterie et la section de commande sont juxtaposées.

13. Équipement de batterie pour un véhicule ferroviaire selon la revendication 9, dans lequel lorsque une pluralité de modules de batterie montés en série sont utilisés comme un ensemble de batteries, les bornes de connexion et les bornes de mise à la terre sont disposées de sorte que les cathodes et les anodes des ensembles de batteries ayant les potentiels impairs les plus faibles sont disposées dans l'ordre depuis une extrémité et les cathodes et les anodes des ensembles de batteries ayant les potentiels pairs les plus faibles sont disposées dans l'ordre depuis l'autre extrémité dans la direction dans laquelle la section de stockage de modules de batterie et la section de commande sont juxtaposées.

14. Véhicule ferroviaire comportant l'équipement de batterie pour un véhicule ferroviaire selon l'une quelconque des revendications 1 à 13.
